# FASCICULE DE BREVET EUROPEEN

(11) **EP 3 466 816 B1**
(45) Date de publication et mention de la délivrance du brevet: **05.08.2020**
(21) Numéro de dépôt: 18198866.8
(22) Date de dépôt: 05.10.2018
(51) Int. Cl.: B64D 13/06

(54) **MODULE AUTONOME DE RÉCUPÉRATION D ÉNERGIE D'UNE CABINE D'UN AÉRONEF ET PROCÉDÉ CORRESPONDANT**
AUTONOMES MODUL ZUR ENERGIERÜCKGEWINNUNG EINER KABINE EINES LUFTFAHRZEUGS, UND ENTSPRECHENDES VERFAHREN
AUTONOMOUS MODULE FOR RECOVERING ENERGY FROM AN AIRCRAFT CABIN AND CORRESPONDING METHOD

(30) Priorité: 05.10.2017 FR 1759334
(43) Date de publication de la demande: 10.04.2019
(73) Titulaire: Liebherr-Aerospace Toulouse SAS, 31200 Toulouse (FR)
(72) Inventeur: LAVERGNE, David, 31620 Bouloc (FR); LABORDE, Fabrice, 31200 Toulouse (FR); DAUMAS, Julien, 31200 Toulouse (FR); FAVREAU, Patrick, 31840 Aussonne (FR)
(74) Mandataire: Bringer, Mathieu

(56) Documents cités:
- EP-A1- 2 998 223
- EP-A2- 0 888 966
- FR-A1- 3 001 442
- US-A- 4 419 926

## Description

### 1. Domaine technique de l'invention

L'invention concerne un module et un procédé de récupération d'énergie d'une cabine d'un aéronef. L'invention concerne également un système de contrôle environnemental d'une cabine d'un aéronef comprenant un tel module, et s'étend à un aéronef équipé d'un tel système de contrôle environnemental.

### 2. Arrière-plan technologique

Dans tout le texte, le terme « cabine » désigne tout espace intérieur d'un aéronef dont la pression et/ou la température de l'air doit être contrôlée. Il peut s'agir d'une cabine pour passagers, du cockpit de pilotage, d'une soute, et de manière générale de toute zone de l'aéronef qui nécessite un air à une pression et/ou une température contrôlée. Le terme « turbine » désigne un dispositif rotatif destiné à utiliser l'énergie cinétique de l'air pour faire tourner un arbre supportant les aubes de la turbine. Le terme « compresseur » désigne un dispositif rotatif destiné à augmenter la pression de l'air qu'il reçoit en entrée.

Un système de contrôle environnemental d'une cabine d'un aéronef comprend de manière connue un dispositif de prélèvement d'air comprimé sur au moins un compresseur d'un moteur de propulsion de l'aéronef et une turbomachine à cycle à air comprenant au moins un compresseur et une turbine, le compresseur étant alimenté en air par le dispositif de prélèvement d'air comprimé après passage par une vanne de régulation de débit ou de pression, et la turbine comprenant une sortie d'air alimentant la cabine en air, dit air frais, à température et débit contrôlés. Le système comprend en outre différents échangeurs de chaleur, vannes de régulation et une boucle d'extraction d'eau.

Le prélèvement d'air sur les moteurs de propulsion de l'aéronef augmente la consommation de carburant. Aussi, différentes solutions ont été proposées pour limiter au maximum ce prélèvement d'air sur les moteurs de propulsion.

L'une des solutions déjà proposées consiste à récupérer une partie de l'énergie de l'air évacué de la cabine pour alimenter une turbine d'une turbomachine reliée mécaniquement à un compresseur destiné à comprimer un air ambiant prélevé à l'extérieur de l'aéronef. Ainsi, l'énergie de la cabine est utilisée pour fournir, par l'intermédiaire de la turbomachine, un air comprimé au système de conditionnement d'air, libérant ainsi partiellement le besoin de prélever l'air sur un moteur propulsif.

L'un des inconvénients qui subsiste avec cette solution concerne les phases de vol au cours desquelles le débit de sortie de cabine n'est plus suffisant pour alimenter la turbine de la turbomachine ou lorsque la pression différentielle entre la cabine et l'environnement ambiant est insuffisante d'un point de vue énergétique. Dans ce cas, la récupération d'énergie cabine est inopérante et les organes dédiés à cette récupération d'énergie deviennent alors une charge inutile qui impacte les performances énergétiques de l'aéronef.

Les inventeurs ont donc cherché à proposer une nouvelle solution permettant de pallier les inconvénients des solutions antérieures.

EP 0 888 966 A2 et US 4 419 926 décrivent chacun un système de récupération d'énergie lié à un système de contrôle environnemental d'une cabine d'aéronef.

### 3. Objectifs de l'invention

L'invention vise à fournir un module autonome de récupération d'énergie qui pallie les inconvénients des solutions antérieures.

En particulier, l'invention vise à fournir un module autonome de récupération d'énergie qui reste opérationnel dans les phases de vol au cours desquelles le débit de sortie de cabine n'est plus suffisant pour alimenter la turbine de la turbomachine ou lorsque la pression différentielle entre la cabine et l'environnement ambiant est insuffisante d'un point de vue énergétique.

L'invention vise aussi à fournir, dans au moins un mode de réalisation, un module autonome de récupération d'énergie qui permet de compenser, au moins partiellement, une panne d'un pack de conditionnement d'air.

L'invention vise aussi à fournir, dans au moins un mode de réalisation, un module autonome de récupération d'énergie qui peut être installé sur un aéronef, sans imposer de modifications substantielles du système de conditionnement d'air préexistant.

L'invention vise aussi à fournir, selon au moins un mode de réalisation, un module autonome qui permet d'augmenter la capacité d'occupation de l'aéronef sur lesquels il est installé, tout en conservant le système de conditionnement d'air préexistant.

L'invention vise aussi à fournir un procédé de récupération d'énergie d'une cabine d'aéronef.

L'invention vise aussi à fournir un système de contrôle environnemental d'une cabine d'aéronef associé à un module de récupération d'énergie selon l'invention.

L'invention vise aussi à fournir un aéronef équipé d'un système de contrôle environnemental selon l'invention.

### 4. Exposé de l'invention

Pour ce faire, l'invention concerne un module de récupération d'énergie d'une cabine d'aéronef comprenant au moins une sortie d'air - notamment une sortie d'air vicié - de la cabine et au moins une entrée d'air frais dans la cabine adaptée pour être alimentée par un système de contrôle environnemental de la cabine, ledit module comprenant :
- une turbomachine comprenant au moins un compresseur muni d'une entrée d'air et une sortie d'air, et au moins une turbine munie d'une entrée d'air et d'une sortie d'air, couplés mécaniquement l'un à l'autre,
- une conduite, dite conduite de récupération d'air cabine, adaptée pour pouvoir relier en communication de fluide une sortie d'air - notamment une sortie d'air vicié - de la cabine et une entrée d'air de ladite turbine, ladite conduite de récupération d'air cabine étant en outre équipée d'une vanne de contrôle de débit d'air, dite vanne de récupération,
- une conduite, dite conduite d'alimentation du compresseur, adaptée pour pouvoir relier en communication de fluide un dispositif de prélèvement d'air extérieur et une entrée d'air du compresseur,
- une conduite, dite conduite d'injection d'air cabine, adaptée pour pouvoir relier en communication de fluide une sortie d'air du compresseur et une entrée d'air frais de la cabine,
- une conduite, dite conduite de secours, adaptée pour pouvoir relier en communication de fluide une source d'air haute pression et une entrée d'air de ladite turbine de ladite turbomachine, ladite conduite de secours étant en outre équipée d'une vanne de régulation de pression d'air, dite vanne de secours,
- une unité de commande de ladite vanne de récupération et de ladite vanne de secours configurée pour pouvoir, selon des conditions opérationnelles prédéterminées, activer au moins l'un des modes de fonctionnement suivants :
   ∘ un mode, dit mode de routine, dans lequel ladite vanne de récupération est ouverte et ladite vanne de secours est fermée, de manière à ce que ladite turbine soit exclusivement alimentée par l'air - notamment l'air vicié - évacué de la cabine,
   ∘ un mode, dit mode de secours, dans lequel ladite vanne de récupération est fermée et ladite vanne de secours est ouverte, de manière à ce que ladite turbine soit exclusivement alimentée par l'air fourni par la source d'air haute pression.

Un module selon l'invention permet donc d'offrir au moins deux modes de fonctionnement, un mode de routine dans lequel la turbine de la turbomachine est alimentée par l'air évacué de la cabine, ce qui permet de récupérer la puissance de l'air de la cabine pour comprimer un air prélevé à l'extérieur en vue de l'injecter dans la cabine, et un mode de secours dans lequel la turbine de la turbomachine est alimentée par un air issu d'une source haute pression, ce qui permet de comprimer un air prélevé à l'extérieur en vue de l'injecter dans la cabine, y compris lorsque le débit de sortie de cabine n'est plus suffisant pour alimenter la turbine de la turbomachine ou lorsque la pression différentielle entre la cabine et l'environnement ambiant est insuffisante d'un point de vue énergétique.

Un module selon l'invention permet donc de fonctionner quelle que soit la phase du vol. Les organes dédiés à la récupération d'énergie peuvent donc être mis à profit du conditionnement d'air, y compris lorsque la récupération d'énergie de la cabine n'est plus possible.

Le module selon l'invention permet également d'augmenter la capacité d'occupation de l'aéronef sur lequel il est monté, sans modifier le système de conditionnement d'air préexistant en permettant la fourniture d'un surplus d'air frais à la cabine.

Le module selon l'invention est autonome et peut être branché en parallèle d'un système de conditionnement d'air préexistant (aussi désigné par les termes de système de contrôle environnemental). Le module selon l'invention forme ainsi un module prêt à l'emploi, plus connu sous la dénomination anglaise de « *plug & play* ». Pour rendre le module opérationnel, il suffit de brancher les conduites de récupération, de secours, d'alimentation du compresseur, et d'injection d'air cabine au niveau de la sortie d'air de la cabine et de l'entrée d'air frais dans la cabine, et de fournir à l'unité de commande les conditions opérationnelles prédéterminées (qui sont par exemple issues de la logique de commande du système de conditionnement d'air de l'aéronef) pour pouvoir piloter les vannes de récupération et de secours selon les besoins. Bien entendu, il faut entendre par « sortie d'air de la cabine » ou « sortie d'air vicié de la cabine » et « entrée d'air frais dans la cabine » des moyens de mise en communication fluidique de la cabine avec le module. En particulier, l'entrée d'air frais dans la cabine comprend avantageusement une conduite reliée au système de conditionnement d'air sur laquelle la conduite d'injection d'air cabine vient se brancher, avantageusement en amont d'une chambre de mélange de manière à pouvoir mélanger le flux d'air fourni par le module de récupération d'énergie selon l'invention et le flux d'air fourni par le système de conditionnement d'air de l'aéronef.

Dans le mode de routine, la vanne de récupération est ouverte (et la vanne de secours est fermée) et la turbine reçoit un débit d'air à une pression différentielle entre la pression de l'air évacué de la cabine et la pression d'air extérieur. Cette turbine entraine le compresseur dont la fonction est d'augmenter la pression de l'air prélevé à l'extérieur, par exemple par le biais d'une prise d'air (plus connue sous la dénomination anglaise de prise d'air *scoop*) et de générer un débit d'air qui est injecté dans la cabine, après un éventuel mélange avec le flux d'air frais fourni par le système de conditionnement d'air de l'aéronef.

Dans le mode secours, la vanne de secours est ouverte (et la vanne de récupération est fermée) et la turbine est entrainée par un flux d'air haute pression issu de la source d'air haute pression. Cette source d'air haute pression est avantageusement formée par un dispositif de prélèvement d'air d'un compresseur d'un moteur propulsif de l'aéronef. Cet air haute pression est plus connu sous la dénomination anglaise d'air *bleed.* La source d'air haute pression peut également être formée par un prélèvement d'air sur un moteur auxiliaire (plus connu sous l'acronyme anglais APU pour *Auxiliary Power Unit*) ou par un prélèvement d'air sur un fan d'un moteur qui est ensuite comprimé. Quelle que soit la source d'air haute pression utilisée pour le mode de secours, la turbine entraine le compresseur de la même manière que pour le mode de routine. Ce dernier a alors aussi pour fonction d'augmenter la pression de l'air prélevé à l'extérieur, par exemple par le biais de la prise d'air *scoop,* et de générer un débit d'air qui est injecté dans la cabine, après un éventuel mélange avec le flux d'air frais fourni par le système de conditionnement d'air de l'aéronef.

Avantageusement et selon l'invention, le module comprend en outre un échangeur thermique adapté pour assurer des échanges thermiques entre le flux d'air véhiculé par ladite conduite de récupération d'air cabine et le flux d'air véhiculé par ladite conduite d'injection d'air cabine, et la conduite de secours débouche dans ladite conduite de récupération d'air cabine en aval de ladite vanne de récupération et en amont dudit échangeur thermique.

Selon cette variante avantageuse, l'échangeur thermique permet de récupérer l'énergie thermique en sortie du compresseur pour augmenter la température, et donc l'énergie en entrée de turbine. Les inventeurs ont déterminé que cette architecture permet de récupérer de l'ordre de 15% de puissance supplémentaire. En outre, cet échangeur thermique permet d'obtenir une température de l'air en sortie du module de récupération d'énergie qui est proche de la température cabine.

Avantageusement et selon l'invention, ladite unité de commande est configurée pour pouvoir activer, selon des conditions opérationnelles prédéterminées, un mode, dit mode intermédiaire, dans lequel les vannes de récupération et de secours sont contrôlées conjointement à l'ouverture de manière à ce que ladite turbine soit alimentée conjointement par l'air évacué de la cabine et l'air fourni par la source d'air haute pression.

Dans le mode intermédiaire, les vannes sont contrôlées - notamment régulées - conjointement de manière à pouvoir alimenter la turbine à la fois par un flux d'air de récupération cabine et par un flux d'air issu de la source haute pression. De la même manière que pour les autres modes de fonctionnement, la turbine entraine alors le compresseur, qui a aussi pour fonction d'augmenter la pression de l'air prélevé à l'extérieur, par exemple par le biais de la prise d'air *scoop,* et de générer un débit d'air qui est injecté dans la cabine, après un éventuel mélange avec le flux d'air frais fourni par le système de conditionnement d'air de l'aéronef.

Avantageusement et selon l'invention, les conditions opérationnelles prédéterminées permettant de définir le mode de fonctionnement du module dépendent du système de contrôle environnemental de la cabine d'aéronef.

Un module selon cette variante permet de compenser au moins partiellement la perte d'un pack de conditionnement d'air en basculant dans le mode secours et en fournissant directement à la cabine l'air frais nécessaire dès que les conditions opérationnelles prédéterminées qui dépendent du système de contrôle environnemental de l'aéronef révèlent, par exemple, une panne du pack. Le module selon l'invention fait donc office de pack de secours en cas de panne du pack de conditionnement d'air principal.

Avantageusement et selon l'invention, le module comprend une vanne trois voies formant à la fois ladite vanne de récupération et ladite vanne de secours.

Un module selon cette variante permet de limiter le nombre d'équipements en ne prévoyant qu'une seule vanne trois voies en lieu et place de la vanne de récupération et de la vanne de secours. Cela permet notamment d'alléger le module selon l'invention et de limiter l'encombrement. En outre, cela permet de faciliter les actions de commande de la vanne.

Avantageusement et selon l'invention, ladite conduite de secours est équipée d'un dispositif de régulation de pression de manière à pouvoir adapter la pression de l'air fourni à ladite turbine aux spécifications techniques de ladite turbine.

Un module selon cette variante permet d'adapter la pression de l'air fourni à la turbine de la turbomachine, dans le mode secours, quelle que soit la turbine de la turbomachine utilisée.

Avantageusement et selon l'invention, le module comprend également une conduite, dite conduite de sortie de turbine, adaptée pour pouvoir relier en communication de fluide ladite sortie d'air de la turbine de la turbomachine et une sortie d'air à l'extérieur de l'aéronef de manière à pouvoir rejeter l'air détendu à l'extérieur de l'aéronef.

Un module selon cette variante permet d'évacuer l'air détendu par la turbine vers l'extérieur de l'aéronef.

Selon une autre variante, la conduite de sortie de turbine débouche dans un canal de circulation d'air dynamique, plus connu sous le terme d'air RAM, du système de contrôle environnemental de la cabine à travers un ou plusieurs échangeurs thermiques.

Avantageusement et selon l'invention, la turbomachine est une turbomachine à au moins deux étages turbines en parallèle.

L'invention concerne également un procédé de récupération d'énergie d'une cabine d'aéronef comprenant au moins une sortie d'air - notamment une sortie d'air vicié - de la cabine et au moins une entrée d'air frais dans la cabine adaptée pour être alimentée par un système de contrôle environnemental de la cabine, dans lequel :
- une entrée d'air d'une turbine d'une turbomachine est reliée en communication de fluide à une sortie d'air - notamment une sortie d'air vicié - de la cabine par l'intermédiaire d'une conduite, dite conduite de récupération d'air cabine, équipée d'une vanne de contrôle de débit d'air, dite vanne de récupération,
- une entrée d'air d'un compresseur de ladite turbomachine est reliée en communication de fluide à un dispositif de prélèvement d'air extérieur par l'intermédiaire d'une conduite, dite conduite d'alimentation du compresseur,
- une sortie d'air dudit compresseur est reliée en communication de fluide à une entrée d'air frais de la cabine par l'intermédiaire d'une conduite, dite conduite d'injection d'air cabine,
- une source d'air haute pression est reliée en communication de fluide à ladite entrée d'air de ladite turbine de ladite turbomachine par l'intermédiaire d'une conduite, dite conduite de secours, équipée d'une vanne de régulation de pression d'air, dite vanne de secours,
- ladite vanne de récupération et ladite vanne de secours sont commandées pour pouvoir, selon des conditions opérationnelles prédéterminées, assurer au moins les modes de fonctionnement suivants :
   ∘ un mode, dit mode de routine, dans lequel ladite vanne de récupération est ouverte et ladite vanne de secours est fermée, de manière à ce que ladite turbine soit exclusivement alimentée par l'air - notamment l'air vicié - évacué de la cabine,
   ∘ un mode, dit mode de secours, dans lequel ladite vanne de récupération est fermée et ladite vanne de secours est ouverte, de manière à ce que ladite turbine soit exclusivement alimentée par l'air fourni par la source d'air haute pression.

Un procédé selon l'invention est avantageusement mis en œuvre par un module de récupération d'énergie selon l'invention et un module de récupération d'énergie selon l'invention met avantageusement en œuvre un procédé selon l'invention. Aussi, les avantages et effets techniques du module selon l'invention sont également obtenus par un procédé selon l'invention. En particulier, un procédé selon l'invention permet d'offrir au moins deux modes de fonctionnement, un mode de routine dans lequel la turbine de la turbomachine est alimentée par l'air évacué de la cabine, ce qui permet de récupérer la puissance de l'air de la cabine pour comprimer un air prélevé à l'extérieur en vue de l'injecter dans la cabine, et un mode de secours dans lequel la turbine de la turbomachine est alimentée par un air issu d'une source haute pression, ce qui permet de comprimer un air prélevé à l'extérieur en vue de l'injecter dans la cabine, y compris lorsque le débit de sortie de cabine n'est plus suffisant pour alimenter la turbine de la turbomachine ou lorsque la pression différentielle entre la cabine et l'environnement ambiant est insuffisante d'un point de vue énergétique.

Avantageusement et selon l'invention, des échanges thermiques sont assurés entre le flux d'air véhiculé par ladite conduite de récupération d'air cabine et le flux d'air véhiculé par ladite conduite d'injection d'air cabine par l'intermédiaire d'un échangeur thermique, et ladite conduite de secours débouche dans ladite conduite de récupération d'air cabine en amont dudit échangeur thermique et en aval de ladite vanne de secours.

Selon cette variante avantageuse, les échanges thermiques assurés par l'échangeur thermique permettent de récupérer l'énergie thermique en sortie du compresseur pour augmenter la température, et donc l'énergie en entrée de turbine.

L'invention concerne également un système de contrôle environnemental d'une cabine d'aéronef comprenant au moins une sortie d'air - notamment une sortie d'air vicié - de la cabine et au moins une entrée d'air frais dans la cabine, ledit système comprenant au moins un pack de conditionnement d'air adapté pour fournir un air climatisé à une entrée d'air frais de la cabine.

Le système de contrôle environnemental selon l'invention est caractérisé en ce qu'il comprend un module de récupération d'air selon l'invention.

Ainsi, pour un même débit de sortie du pack de conditionnement d'air, le système selon l'invention permet de limiter le prélèvement d'air sur le compresseur du moteur d'aéronef, et donc de limiter la consommation de carburant. En outre, le module de récupération d'air participe non seulement à la limiter le prélèvement d'air sur les moteurs propulsifs dans le mode routine, mais il permet également de compenser au moins partiellement dans le mode de secours un pack de conditionnement en cas de panne de ce dernier, comme expliqué précédemment.

L'invention concerne également un aéronef comprenant au moins un moteur de propulsion et une cabine, caractérisé en ce qu'il comprend un système de contrôle environnemental de cette cabine selon l'invention.

L'invention concerne également un module et un procédé de récupération d'énergie cabine, un système de contrôle environnemental, et un aéronef caractérisés en combinaison par tout ou partie des caractéristiques mentionnées ci-dessus ou ci-après.

### 5. Liste des figures

D'autres buts, caractéristiques et avantages de l'invention apparaîtront à la lecture de la description suivante donnée à titre uniquement non limitatif et qui se réfère aux figures annexées dans lesquelles :
- la figure 1 est une vue schématique d'un module de récupération d'énergie selon un mode de réalisation de l'invention,
- la figure 2 est une vue schématique d'un système de contrôle environnemental selon un mode de réalisation de l'invention.

### 6. Description détaillée d'un mode de réalisation de l'invention

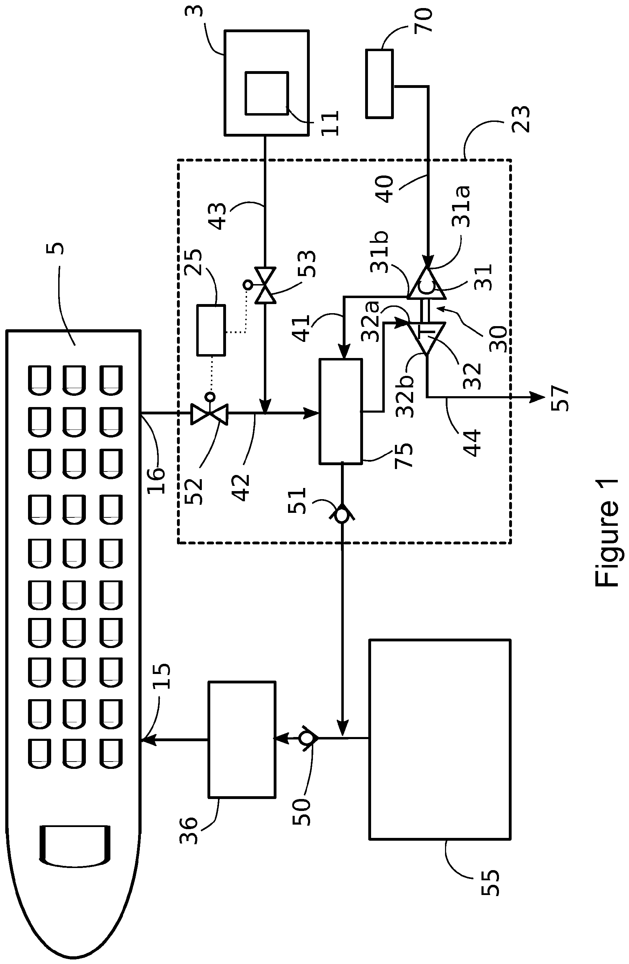

La figure 1 représente schématiquement un aéronef comprenant une cabine 5 de passagers, et au moins un moteur principal 3. Ce moteur principal 3 dédié à la propulsion de l'aéronef comprend par exemple un compresseur 11 et une turbine non représentée sur la figure 1.

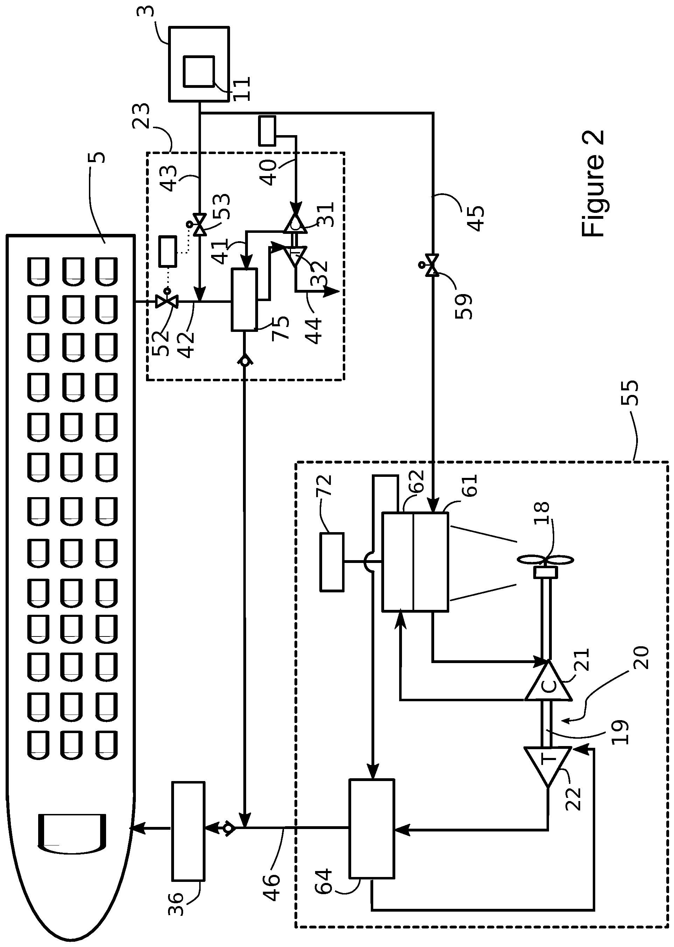

La figure 1 illustre également un pack 55 de conditionnement d'air, plus connu sous l'acronyme ECS. Ce pack 55 de conditionnement peut présenter différents modes de réalisation dont un mode de réalisation est schématiquement représenté sur la figure 2. Le pack 55 de conditionnement d'air représenté schématiquement sur la figure 2 est un pack dont l'architecture met principalement en œuvre des moyens pneumatiques. Il convient néanmoins de noter que l'invention s'applique également à un pack de conditionnement d'air électrique ou à un pack de conditionnement d'air mixte, électrique et pneumatique.

La figure 1 illustre un module 23 de récupération selon un mode de réalisation de l'invention. Ce module 23 de récupération d'énergie selon l'invention comprend une turbomachine 30 comprenant un compresseur 31 et une turbine 32 couplés mécaniquement l'un à l'autre.

Le compresseur 31 comprend une entrée d'air 31a reliée en communication de fluide à une prise d'air extérieure 70 par l'intermédiaire d'une conduite 40 d'alimentation du compresseur, et une sortie d'air 31b reliée en communication de fluide à une entrée d'air frais 15 dans la cabine 5 par l'intermédiaire d'une conduite 41 d'injection d'air cabine.

La turbine 32 comprend une entrée d'air 32a reliée en communication de fluide à une sortie d'air 16 de la cabine 5 par l'intermédiaire d'une conduite 42 de récupération d'air cabine. Cette conduite 42 est équipée d'une vanne de contrôle de débit d'air, dite vanne de récupération 52. Cette vanne de récupération 52 peut être une vanne de régulation du débit d'air.

L'entrée d'air 32a de la turbine est également reliée en communication de fluide audit compresseur 11 du moteur propulsif 3 par l'intermédiaire d'une conduite 43 de secours. Cette conduite 43 de secours est équipée d'une vanne de régulation de pression d'air, dite vanne 53 de secours. Cette vanne 53 de secours est par exemple associée à un capteur de pression logé dans la conduite de secours de manière à pouvoir fournir des mesures de la pression en aval de la vanne 53 permettant à la vanne de secours de réguler la pression d'air fourni à la turbine de la turbomachine.

La turbine 32 comprend également une sortie d'air 32b reliée en communication de fluide à une sortie d'air extérieur 57 par l'intermédiaire d'une conduite 44 de sortie de turbine.

Le module 23 de récupération d'énergie comprend également un échangeur thermique 75 adapté pour assurer des échanges thermiques entre le flux d'air véhiculé par la conduite 42 de récupération d'air cabine et le flux d'air véhiculé par la conduite 41 d'injection d'air cabine. Cet échangeur thermique 75, plus connu sous la dénomination anglaise d'*intercooler* permet de récupérer l'énergie thermique en sortie du compresseur 31 pour augmenter la température, et donc l'énergie en entrée de turbine 32. En outre, cet échangeur thermique 75 permet d'obtenir une température de l'air en sortie du module 23 de récupération d'énergie qui est proche de la température de l'air cabine 5. En d'autres termes, l'échangeur thermique 75 permet d'auto-stabiliser la température de l'air comprimé par le compresseur 31.

Le module 23 de récupération d'énergie comprend enfin une unité de commande 25 de la vanne de récupération 52 et de la vanne de secours 53.

Cette unité de commande 25 peut être de tous types et dépend du type de vanne de régulation utilisée.

L'unité de commande 25 est configurée pour pouvoir commander l'ouverture/fermeture de chacune des deux vannes de manière à pouvoir commander l'alimentation de la turbine 32, soit par l'air évacué de la cabine (mode de routine), soit par l'air haute pression fourni par le compresseur 11 du moteur propulsif 3 de l'aéronef (mode de secours).

L'unité de commande peut également commander l'ouverture simultanée des deux vannes de manière à alimenter la turbine 32 à la fois par l'air évacué de la cabine et par l'air haute pression issu du compresseur 11 du moteur propulsif.

Le module 23 selon le mode de réalisation de la figure 1 comprend également un clapet 51 agencé sur la conduite 41 d'injection d'air dans la cabine.

Un module 23 selon l'invention est autonome de sorte qu'il peut être branché directement sur un aéronef entre la sortie d'air 16 de la cabine et l'entrée d'entrée d'air frais 15 dans la cabine. De préférence, la sortie d'air 16 et l'entrée d'air 15 sont chacune équipée d'une vanne commandée, non représentée sur les figures. Ces vannes sont en général prévues sur tous les aéronefs pour permettre le renouvellement de l'air dans la cabine 5 et le contrôle de la pression régnant dans la cabine. Ces vannes d'entrée et de sortie de cabine sont commandées par une logique de commande de la pressurisation de la cabine 5 en fonction des différentes phases du vol et des conditions d'utilisation de la cabine, notamment le nombre de passagers dans la cabine.

De préférence, le module 23 est associé au pack de conditionnement d'air 55 de l'aéronef. Pour ce faire, la conduite 41 d'alimentation de la cabine alimente une chambre de mélange 36 également alimentée par l'air fourni par le pack de conditionnement d'air 55. Cette chambre de mélange 36 permet de recevoir les flux d'air fourni d'une part le pack de conditionnement d'air 55 et d'autre part, par le module 23 de récupération d'énergie cabine, et de les mélanger avant leur introduction dans la cabine 5. Cette chambre de mélange 36 est alimentée par une conduite qui reçoit les deux flux d'air. Cette conduite comprend de préférence un clapet 50 anti-retour.

La figure 2 représente de manière plus détaillée le pack de conditionnement d'air 55 et de manière moins détaillé le module 23 de récupération d'énergie cabine.

Un pack de conditionnement d'air, plus connu sous l'acronyme anglais ECS pour *Environnemental Control System* peut être formé d'un ensemble d'organes renfermés dans un carter ou logement et présentant des ports de connexion d'entrée et de sortir d'air et un canal de circulation d'air dynamique, plus connu sous le terme d'air RAM, à travers un ou plusieurs échangeurs thermiques. Un tel pack peut faire l'objet de nombreuses variantes de réalisation compatible avec un module de récupération d'énergie selon l'invention. La figure 2 illustre schématiquement une des variantes de réalisation possibles.

Un tel pack comprend, et tel que représenté sur la figure 2, au moins une turbomachine 20 à cycle à air qui comprend, selon le mode de réalisation de la figure 2, un compresseur 21 et une turbine 22 reliés l'un à l'autre par un arbre rotatif 19. La turbomachine comprend également un ventilateur 18 configuré pour assurer la circulation d'un air dynamique, connu sous l'acronyme RAM, à travers de échangeurs thermiques. Selon le mode de réalisation de la figure, le ventilateur 18 est monté sur l'arbre 19 rotatif reliant le compresseur 21 et la turbine 22. Selon un autre mode de réalisation, le ventilateur peut être entrainé en rotation par d'autres moyens, comme par exemple par des moyens électriques.

Selon une variante de réalisation non représentée sur les figures, la conduite de sortie 44 de la turbine du module 23 débouche dans un canal de circulation de l'air dynamique du pack 55 de conditionnement d'air.

Le pack comprend également une boucle d'extraction d'eau 64 qui n'est pas représentée en détail à des fins de clarté, et qui est bien connue de l'homme du métier.

Le pack 55 de conditionnement d'air est alimenté en air prélevé sur le compresseur 11 du moteur 3 par l'intermédiaire d'une conduite 45 de prélèvement d'air, et le pack 55 alimente la cabine 5 par l'intermédiaire d'une conduite 46 d'entrée de cabine. La conduite 45 de prélèvement est équipée d'une vanne 59 pilotée par une logique de commande du pack 55 de conditionnement d'air de manière à pouvoir adapter le débit et/ou la pression d'air fourni au pack en fonction des besoins.

Un premier circuit d'un échangeur thermique 62 air/air est interposé entre la sortie du compresseur 21 et l'entrée de la turbine 22 de manière à pouvoir refroidir l'air comprimé et réchauffé délivré par le compresseur 21 avant son introduction dans l'entrée d'air de la turbine 22. A l'aval de l'échangeur thermique 62, le flux d'air comprimé et refroidi passe dans une boucle d'extraction d'eau 64. Cette boucle d'extraction d'eau 64 comprend par exemple un réchauffeur formé d'un échangeur de chaleur air/air, un condenseur formé également d'un échangeur de chaleur air/air et un extracteur d'eau. L'air froid détendu à la sortie de la turbine 22 passe à travers le condenseur de la boucle d'extraction d'eau 64 pour refroidir le flux d'air à l'amont de la turbine 22, puis alimente la chambre de mélange 36.

L'échangeur thermique 62 comprend un deuxième circuit traversé par de l'air à pression dynamique en provenance d'au moins une bouche 72 de prélèvement d'air pour le refroidissement de l'air comprimé réchauffé entre le compresseur 21 et la turbine 22.

En outre, un premier circuit d'un échangeur thermique 61 de refroidissement air/air est interposé entre l'entrée du système de conditionnement d'air 55 et l'entrée d'air du compresseur 21. Le deuxième circuit de cet échangeur thermique 61 est traversé par de l'air à la pression dynamique en provenance de la bouche 72 de prélèvement d'air. Cet échangeur thermique 61 permet ainsi de refroidir l'air entrant dans le pack de conditionnement d'air 55 avant son entrée dans le compresseur 21 de la turbomachine 20 à cycle à air. Comme indiqué précédemment, selon une variante de réalisation non représentée, la conduite de sortie 44 de turbine débouche dans le canal de circulation du l'air à pression dynamique en provenance de la bouche 72 de prélèvement d'air.

La circulation d'air dans les deuxièmes circuits des échangeurs thermiques 61, 62 est assuré par le ventilateur 18.

Chaque échangeur thermique 61, 62 permet un transfert de chaleur entre son premier circuit et son deuxième circuit selon la différence de température des flux d'air traversant respectivement chaque circuit.

Un système de contrôle environnemental selon le mode de réalisation de la figure 2 permet ainsi de fournir un air à température et pression contrôlés par le pack de conditionnement d'air 55 tout en limitant les prélèvements sur le moteur 3 de l'aéronef de part la présence du module 23 de récupération d'énergie cabine et sa capacité à fonctionner dans un mode routine dans lequel il fournit un air à pression à température et pression contrôlés en complément de l'air fourni par le pack de conditionnement d'air 55.

En outre, l'invention permet de pallier au moins partiellement une éventuelle défaillance du pack de conditionnement d'air en prévoyant un mode secours dans lequel l'unité de commande 25 du module 23 commande l'ouverture de la vanne 53 de secours pour alimenter la turbine 32 de manière à pouvoir entrainer le compresseur 31 de la turbomachine 30 permettant de fournir un air à température et pression contrôlés à la chambre de mélange 36.

Un aéronef selon l'invention peut comprendre un seul moteur 3 et un seul système de contrôle environnemental selon l'invention. En variante, l'aéronef comprend deux moteurs propulsifs et plusieurs systèmes de contrôle environnemental selon l'invention, ou un seul système de contrôle environnemental pour plusieurs moteurs. De même, l'aéronef peut comprendre un seul module de récupération d'énergie cabine pour un ou plusieurs systèmes de contrôle environnemental ou un module de récupération d'énergie par système de contrôle environnemental selon l'invention.

## Revendications

1. Module (23) de récupération d'énergie d'une cabine d'aéronef comprenant au moins une sortie d'air (16) de la cabine et au moins une entrée d'air frais (15) dans la cabine adaptée pour être alimentée par un système de contrôle environnemental de la cabine, ledit module comprenant :
- une turbomachine (30) comprenant au moins un compresseur (31) muni d'une entrée d'air (31a) et une sortie d'air (31b), et au moins une turbine (32) munie d'une entrée d'air (32a) et d'une sortie d'air (32b), couplés mécaniquement l'un à l'autre,
- une conduite, dite conduite de récupération (42) d'air cabine, adaptée pour pouvoir relier en communication de fluide une sortie d'air (16) de la cabine et une entrée d'air (32a) de ladite turbine (32),
- une conduite, dite conduite d'alimentation (40) du compresseur, adaptée pour pouvoir relier en communication de fluide un dispositif de prélèvement d'air extérieur (70) et une entrée d'air (31a) du compresseur (31),
- une conduite, dite conduite d'injection (41) d'air cabine, adaptée pour pouvoir relier en communication de fluide une sortie (31b) d'air du compresseur (31) et une entrée d'air frais (15) dans la cabine,
**caractérisé en ce que** ledit module comprend en outre :
- une vanne de contrôle de débit d'air, dite vanne de récupération (52), équipant ladite conduite de récupération (42) d'air cabine,
- une conduite, dite conduite de secours (43), adaptée pour pouvoir relier en communication de fluide une source d'air haute pression et une entrée (32a) de la turbine (32), ladite conduite de secours étant en outre équipée d'une vanne de régulation de pression d'air, dite vanne de secours (53),
- une unité de commande (25) de ladite vanne de récupération (52) et de ladite vanne de secours (53) configurée pour pouvoir, selon des conditions opérationnelles prédéterminées, activer au moins l'un des modes de fonctionnement suivants :
• un mode, dit mode de routine, dans lequel ladite vanne de récupération (52) est ouverte et ladite vanne de secours (53) est fermée, de manière à ce que ladite turbine (32) soit exclusivement alimentée par l'air évacué de la cabine (5),
• un mode, dit mode de secours, dans lequel ladite vanne de récupération (52) est fermée et ladite vanne de secours (53) est ouverte, de manière à ce que ladite turbine (32) soit exclusivement alimentée par l'air fourni par la source d'air haute pression.

2. Module selon la revendication 1, **caractérisé en ce qu'**il comprend en outre un échangeur thermique (75) adapté pour assurer des échanges thermiques entre le flux d'air véhiculé par ladite conduite de récupération (42) d'air cabine et le flux d'air véhiculé par ladite conduite d'injection (41) d'air cabine, et **en ce que** ladite conduite de secours (43) débouche dans ladite conduite de récupération (42) d'air cabine en aval de ladite vanne de récupération (52) et en amont dudit échangeur thermique (75).

3. Module selon l'une des revendications 1 ou 2, **caractérisé en ce que** ladite unité de commande (25) est configurée pour pouvoir activer, selon des conditions opérationnelles prédéterminées, un mode, dit mode intermédiaire, dans lequel les vannes de récupération (52) et de secours (53) sont contrôlées conjointement à l'ouverture de manière à ce que ladite turbine (32) soit alimentée conjointement par l'air évacué de la cabine et l'air fourni par la source d'air haute pression.

4. Module selon l'une des revendications 1 à 3, **caractérisé en ce que** lesdites conditions opérationnelles prédéterminées permettant de définir le mode de fonctionnement dudit module dépendent dudit système de contrôle environnemental de la cabine d'aéronef.

5. Module selon l'une des revendications 1 à 4, **caractérisé en ce qu'**il comprend une vanne trois voies formant à la fois ladite vanne de récupération (52) et ladite vanne de secours (53).

6. Module selon l'une des revendications 1 à 5, **caractérisé en ce que** ladite source d'air haute pression est un dispositif de prélèvement d'air d'un compresseur (11) d'un moteur (3) propulsif de l'aéronef.

7. Module selon l'une des revendications 1 à 6, **caractérisé en ce que** ladite conduite de secours (43) est équipé d'un dispositif de régulation de pression de manière à adapter la pression de l'air fourni à ladite turbine aux spécifications techniques de ladite turbine (32).

8. Module selon l'une des revendications 1 à 7, **caractérisé en ce qu'**il comprend en outre une conduite, dite conduite de sortie (44) de turbine, adaptée pour pouvoir relier en communication une sortie d'air (32b) de la turbine (32) de la turbomachine (30) et une sortie d'air à l'extérieur de l'aéronef de manière à pouvoir rejeter l'air détendu à l'extérieur de l'aéronef.

9. Module selon l'une des revendications 1 à 8, **caractérisé en ce que** ladite turbomachine (30) est une turbomachine à au moins deux étages turbines en parallèle.

10. Procédé de récupération d'énergie d'une cabine (5) d'aéronef comprenant au moins une sortie d'air (16) de la cabine et au moins une entrée d'air frais (15) dans la cabine adaptée pour être alimentée par un système de contrôle environnemental de la cabine, **caractérisé en ce que** :
- une entrée d'air (32a) d'une turbine (32) d'une turbomachine (30) est reliée en communication de fluide à une sortie d'air de la cabine par l'intermédiaire d'une conduite, dite conduite de récupération (42) d'air cabine, équipée d'une vanne de contrôle de débit d'air, dite vanne de récupération (52),
- une entrée d'air (31a) d'un compresseur (31) de ladite turbomachine (30) est reliée en communication de fluide à un dispositif de prélèvement (70) d'air extérieur par l'intermédiaire d'une conduite, dite conduite d'alimentation (40) du compresseur,
- une sortie d'air (31b) dudit compresseur (31) est reliée en communication de fluide à une entrée d'air frais (15) de la cabine par l'intermédiaire d'une conduite, dite conduite d'injection (41) d'air cabine,
- une source d'air haute pression est reliée en communication de fluide à ladite entrée d'air (32a) de la turbine (32) par l'intermédiaire d'une conduite, dite conduite de secours (43), équipée d'une vanne de régulation de pression d'air, dite vanne de secours (53),
- ladite vanne de récupération (52) et ladite vanne de secours (53) sont commandées pour pouvoir, selon des conditions opérationnelles prédéterminées, assurer au moins les modes de fonctionnement suivants :
• un mode, dit mode de routine, dans lequel ladite vanne de récupération (52) est ouverte et ladite vanne de secours (53) est fermée, de manière à ce que ladite turbine (32) soit exclusivement alimentée par l'air évacué de la cabine,
• un mode, dit mode de secours, dans lequel ladite vanne de récupération (52) est fermée et ladite vanne de secours (53) est ouverte, de manière à ce que ladite turbine (32) soit exclusivement alimentée par l'air fourni par la source d'air haute pression.

11. Procédé selon la revendication 10, **caractérisé en ce que** des échanges thermiques sont assurés entre le flux d'air véhiculé par ladite conduite de récupération (42) d'air cabine et le flux d'air véhiculé par ladite conduite d'injection (41) d'air cabine par l'intermédiaire d'un échangeur thermique (75), et **en ce que** ladite conduite de secours (43) débouche dans ladite conduite de récupération (42) d'air cabine en aval de ladite vanne de récupération (52) et en amont dudit échangeur thermique (75).

12. Système de contrôle environnemental d'une cabine (5) d'aéronef comprenant au moins une sortie d'air (16) de la cabine (5) et au moins une entrée d'air frais (15) dans la cabine, ledit système comprenant au moins un pack (55) de conditionnement d'air adapté pour fournir un air climatisé à une entrée d'air frais de la cabine, **caractérisé en ce qu'**il comprend un module (23) de récupération d'air selon l'une des revendications 1 à 9.

13. Aéronef comprenant au moins un moteur (3) de propulsion et une cabine (5), **caractérisé en ce qu'**il comprend un système de contrôle environnemental de cette cabine selon la revendication 12.

## Patentansprüche

1. Modul (23) zur Gewinnung von Energie aus einer Flugzeugkabine, welche mindestens einen Luftauslass (16) aus der Kabine und mindestens einen Frischlufteinlass (15) in die Kabine aufweist, und das ausgestaltet ist, durch ein Umgebungs-Steuersystem der Kabine versorgt zu werden, **dadurch gekennzeichnet, dass** das Modul umfasst:
- einen Turbinenmotor (30), welcher mindestens einen Kompressor (31) umfasst, der mit einem Lufteinlass (31a) und einem Luftauslass (31b) ausgestattet ist, und mindestens eine Turbine (32), die mit einem Lufteinlass (32a) und einem Luftauslass (32b) ausgestattet ist, die mechanisch miteinander gekoppelt sind,
- eine Leitung, die Kabinenluft-Rückgewinnungsleitung (42), welche angepasst ist, fluid mit einem Luftauslass (16) aus der Kabine und einem Lufteinlass (32a) der Turbine (32) verbunden zu sein,
- eine Leitung, die Kompressor Zuführleitung (40), welche angepasst ist, ein Außenluft-Entnahmegerät (70) und einen Lufteinlass (31a) des Kompressors (31) fluid zu verbinden,
- eine Leitung, die Kabinenluft-Einlassleitung (41), welche angepasst ist, einen Luftauslass (31b) des Kompressors (31) und einen Frischlufteinlass (15) in die Kabine fluid zu verbinden,
**dadurch gekennzeichnet, dass** das Modul weiter umfasst:
- ein Luftstrom-Steuerventil, das Rückgewinnungsventil (52), mit dem die Kabinenluft-Rückgewinnungsleitung (42) ausstattet ist,
- eine Leitung, die Notfallleitung (43), welche angepasst ist, eine Hochdruck-Luftquelle und einen Einlass (32a) der Turbine (32) fluid zu verbinden, worin die Notfallleitung weiter mit einem Luftdrucksteuerventil, das Notfallventil (53), ausgestattet ist,
- eine Steuereinheit (25) für das Rückgewinnungsventil (52) und das Notfallventil (53), die angepasst ist, aufgrund bestimmter Betriebsbedingungen mindestens eine der folgenden Betriebs-Modi zu aktivieren:
• einen Modus, als Routine-Modus bezeichnet, bei dem das Rückgewinnungsventil (52) offen und das Notfallventil (53) geschlossen ist, so dass die Turbine (32) ausschließlich mit der aus der Kabine (5) entnommenen Luft versorgt wird,
• einen Modus, als Notfall-Modus bezeichnet, bei dem das Rückgewinnungsventil (52) geschlossen und das Notfallventil (53) offen ist, so dass die Turbine (32) ausschließlich mit von der Hochdruck-Luftquelle gelieferten Luft versorgt wird.

2. Modul nach Anspruch 1, **dadurch gekennzeichnet, dass** es weiter einen Wärmetauscher (75) umfasst, der ausgestaltet ist, einen Wärmeaustausch zwischen dem durch die Kabinenluft-Rückgewinnungsleitung (42) geführten Luftstrom und dem durch die Kabinenluft-Einlassleitung (41) geführten Luftstrom sicherzustellen, und dass die Notfall-Leitung (43) in die Kabinenluft-Rückgewinnungsleitung (42) stromabwärts des Rückgewinnungsventils (52) und stromaufwärts des Wärmetauschers (75) führt.

3. Modul nach einem der Ansprüche 1 oder 2, **dadurch gekennzeichnet, dass** die Steuereinheit (25) ausgestaltet ist, gemäß bestimmten Betriebsbedingungen, einen Modus, als Zwischen-Modus bezeichnet, zu aktivieren, in dem das Rückgewinnungsventil (52) und das Notfallventil (53) beim Öffnen gemeinsam gesteuert werden, so dass die Turbine (32) gleichzeitig mit der aus der Kabine entnommenen Luft und der durch die Hochdruck-Luftquelle gelieferten Luft beliefert wird.

4. Modul nach einem der Ansprüche 1 bis 3, **dadurch gekennzeichnet, dass** die bestimmten Betriebsbedingungen es ermöglichen, den Betriebsmodus des Moduls in Abhängigkeit von dem Umgebungs-Steuersystem der Flugzeugkabine zu definieren.

5. Modul nach einem der Ansprüche 1 bis 4, **dadurch gekennzeichnet, dass** es ein Drei-Wegeventil umfasst, das gleichzeitig das Rückgewinnungsventil (52) und das Notfallventil (53) ausbildet.

6. Modul nach einem der Ansprüche 1 bis 5, **dadurch gekennzeichnet, dass** die Hochdruck-Luftquelle ein Luft-Entnahmegerät eines Kompressors (11) eines Antriebsmotors (3) des Flugzeugs ist.

7. Modul nach einem der Ansprüche 1 bis 6, **dadurch gekennzeichnet, dass** die Notfallleitung (43) mit einem Drucksteuergerät ausgestattet ist, um den Druck der zu der Turbine geführten Luft an die technischen Vorgaben der Turbine (32) anzupassen.

8. Modul nach einem der Ansprüche 1 bis 7, **dadurch gekennzeichnet, dass** es weiter eine Leitung umfasst, eine Turbinenauslass-Leitung (44), welche angepasst ist, einen Luftauslass (32b) der Turbine (32) des Turbinenmotors (30) und einen Luftauslass außerhalb des Flugzeugs derart fluid zu verbinden, dass die expandierte Luft außerhalb des Flugzeugs ausgestoßen werden kann.

9. Modul nach einem der Ansprüche 1 bis 8, **dadurch gekennzeichnet, dass** der Turbinenmotor (30) ein Turbinenmotor ist, der mindestens zwei Turbinenstufen parallel aufweist.

10. Verfahren zur Gewinnung von Energie einer Flugzeugkabine (5), welche mindestens einen Luftauslass (16) aus der Kabine und mindestens einen Frischlufteinlass (15) in die Kabine, umfasst, worin der Einlass ausgestaltet ist von einem Umgebungs-Steuersystem der Kabine versorgt zu werden, **dadurch gekennzeichnet, dass**:
- ein Lufteinlass (32a) einer Turbine (32) eines Turbinenmotors (30) mit einem Auslass für Luft aus der Kabine mittels einer Leitung fluid verbunden ist, worin die Kabinenluft-Rückgewinnungsleitung (42) mit einem Luftstrom-Steuerventil, als Rückgewinnungsventil (52) bezeichnet, ausgestattet ist,
- ein Lufteinlass (31a) eines Kompressor (31) des Turbinenmotors (30) mit einem Aussenluftentnahmegerät (70) mittels einer Leitung, der Kompressor-Zuführleitung (40), fluid in Verbindung steht,
- ein Luftauslass (31b) des Kompressors (31) mit einem Frischlufteinlass (15) der Kabine mittels einer Leitung, der Kabinenluft-Einlassleitung (41), fluid in Verbindung steht,
- eine Hochdruck-Luftquelle mit dem Lufteinlass (32a) der Turbine (32) mittels einer Leitung, der Notfallleitung (43), fluid in Verbindung steht, die mit einem Luftdrucksteuerventil, als Notfallventil (53) bezeichnet, ausgestattet ist,
- das Rückgewinnungsventil (52) und das Notfallventil (53) gesteuert werden, um gemäß bestimmter Betriebsbedingungen mindestens die folgenden Betriebsmodi sicherstellen zu können:
• ein Modus, als Routinemodus bezeichnet, bei dem das Rückgewinnungsventil (52) offen und das Notfallventil (53) geschlossen ist, so dass die Turbine (32) ausschließlich mit aus der Kabine entnommener Luft versorgt wird,
• ein Modus, als Notfallmodus bezeichnet, in dem das Rückgewinnungsventil (52) geschlossen und das Notfallventil (53) offen ist, so dass die Turbine (32) ausschließlich mit von der Hochdruck-Luftquelle gelieferter Luft versorgt wird.

11. Verfahren nach Anspruch 10, **dadurch gekennzeichnet, dass** ein Wärmeaustausch zwischen dem durch die Kabinenluft-Rückgewinnungsleitung (42) geführten Luftstrom und dem durch die Kabinenluft-Einlassleitung (41) geführten Luftstrom mittels eines Wärmetauschers (75) sichergestellt wird, und dass die Notfallleitung (43) in die Kabinenluft-Rückgewinnungs-leitung (42) stromabwärts des Rückgewinnungsventils (52) und stromaufwärts des Wärmetauschers (75) führt.

12. Umgebungs-Steuersystem einer Flugzeugkabine (5), welche mindestens einen Luftauslass (16) aus der Kabine (5) und mindestens einen Frischlufteinlass (15) in die Kabine umfasst, worin das System ein Klima-Aggregat (55) umfasst, das ausgestaltet ist, klimatisierte Luft in einen Frischlufteinlass der Kabine einzubringen, **dadurch gekennzeichnet, dass** es ein Modul (23) zur Gewinnung von Energie nach einem der Ansprüche 1 bis 9 umfasst.

13. Flugzeug, welche mindestens einen Antriebsmotor (3) und eine Kabine (5) umfasst, **dadurch gekennzeichnet, dass** es ein Umgebungs-Steuersystem nach Anspruch 12 für diese Kabine aufweist.

## Claims

1. Module (23) for recovery of energy of an aircraft cabin comprising at least one air outlet (16) from the cabin and at least one fresh air inlet (15) into the cabin, designed to be supplied by an environmental control system of the cabin, **characterised in that** the said module comprises:
- a turbine engine (30) comprising at least one compressor (31) equipped with an air inlet (31a) and an air outlet (31b), and at least one turbine (32) equipped with an air inlet (32a) and an air outlet (32b) which are mechanically coupled to one another,
- a duct, said cabin-air recovery duct (42), adapted to fluidically link an air outlet (16) from the cabin and an air inlet (32a) of the said turbine (32),
- a duct, said compressor supply duct (40), adapted to fluidically link an outside-air bleed device (70) and an air inlet (31a) of the compressor (31),
- a duct, said cabin-air injection duct (41), adapted to fluidically link an air outlet (31b) of the compressor (31) and a fresh air inlet (15) into the cabin,
**characterized in that** the module further comprises:
- an air flow control valve, said recovery valve (52), equipping said cabin-air recovery duct (42),
- a duct, said emergency duct (43), adapted to fluidically link a high-pressure air source and an inlet (32a) of the turbine (32), the said emergency duct moreover being equipped with an air pressure control valve, said emergency valve (53),
- a control unit (25) for the said recovery valve (52) and the said emergency valve (53), adapted to, according to predetermined operational conditions, activate at least one of the following modes of operation:
• a mode, called routine mode, in which the said recovery valve (52) is open and the said emergency valve (53) is closed, in such a manner that the said turbine (32) is exclusively supplied by the air evacuated from the cabin (5),
• a mode, called emergency mode, in which the said recovery valve (52) is closed and the said emergency valve (53) is open, in such a manner that the said turbine (32) is exclusively supplied by the air provided by the high-pressure air source.

2. Module according to Claim 1, **characterised in that** it moreover comprises a heat exchanger (75) designed to ensure heat exchanges between the air flow conveyed by the said cabin-air recovery duct (42) and the air flow conveyed by the said cabin-air injection duct (41), and **in that** the said emergency duct (43) leads into the said cabin-air recovery duct (42) downstream of the said recovery valve (52) and upstream of the said heat exchanger (75).

3. Module according to any one of Claims 1 or 2, **characterised in that** the said control unit (25) is configured to be able to activate, according to predetermined operational conditions, a mode, called intermediary mode, in which the recovery valve (52) and emergency valve (53) are jointly controlled upon opening, in such a manner that the said turbine (32) is jointly supplied by the air evacuated from the cabin and the air provided by the high-pressure air source.

4. Module according to any one of Claims 1 to 3, **characterised in that** the said predetermined operational conditions make it possible to define the mode of operation of the said module, depending on the said environmental control system of the aircraft cabin.

5. Module according to any one of Claims 1 to 4, **characterised in that** it comprises a three-way valve that simultaneously forms the said recovery valve (52) and the said emergency valve (53).

6. Module according to any one of Claims 1 to 5, **characterised in that** the said high-pressure air source is an air bleed device of a compressor (11) of a propulsion engine (3) of the aircraft.

7. Module according to any one of Claims 1 to 6, **characterised in that** the said emergency duct (43) is equipped with a pressure regulation device in such a manner to adapt the pressure of the air supplied to the said turbine, to the technical specifications of the said turbine (32).

8. Module according to any one of Claims 1 to 7, **characterised in that** it moreover comprises a duct, said a turbine outlet duct (44), adapted to fluidically link an air outlet (32b) of the turbine (32) of the turbine engine (30) and an air outlet outside of the aircraft in such a manner to be able to expel the expanded air outside of the aircraft.

9. Module according to any one of Claims 1 to 8, **characterised in that** the said turbine engine (30) is a turbine engine that has at least two turbine stages in parallel.

10. Process for recovery of energy of an aircraft cabin (5) comprising at least one air outlet (16) from the cabin and at least one fresh air inlet (15) into the cabin, which inlet is designed to be supplied by an environmental control system of the cabin, **characterised in that**:
- an air inlet (32a) of a turbine (32) of a turbine engine (30) is fluidically in communication with an outlet for air from the cabin by means of a duct, said cabin-air recovery duct (42), equipped with an air flow control valve, called recovery valve (52),
- an air inlet (31a) of a compressor (31) of the said turbine engine (30) is fluidically in communication with an outside air bleed device (70) by means of a duct, said compressor supply duct (40),
- an air outlet (31b) of the said compressor (31) is fluidically in communication with a fresh air inlet (15) of the cabin by means of a duct, said cabin-air injection duct (41),
- a high-pressure air source is fluidically in communication with the said air inlet (32a) of the turbine (32) by means of a duct, said emergency duct (43), equipped with an air pressure control valve, called emergency valve (53),
- the said recovery valve (52) and the said emergency valve (53) are controlled to be able to, according to predetermined operational conditions, ensure at least the following modes of operation:
• a mode, called routine mode, in which the said recovery valve (52) is open and the said emergency valve (53) is closed, in such a manner that the said turbine (32) is exclusively supplied by the air evacuated from the cabin,
• a mode, called emergency mode, in which the said recovery valve (52) is closed and the said emergency valve (53) is open, in such a manner that the said turbine (32) is exclusively supplied by the air provided by the high-pressure air source.

11. Process according to Claim 10, **characterised in that** heat exchanges are ensured between the air flow conveyed by the said cabin-air recovery duct (42) and the air flow conveyed by the said cabin-air injection duct (41) by means of a heat exchanger (75), and **in that** the said emergency duct (43) leads into the said cabin-air recovery duct (42) downstream of the said recovery valve (52) and upstream of the said heat exchanger (75).

12. Environmental control system of an aircraft cabin (5) comprising at least one air outlet (16) from the cabin (5) and at least one fresh air inlet (15) into the cabin, the said system comprising at least one air conditioning pack (55) designed to provide conditioned air to a fresh air inlet of the cabin, **characterised in that** it comprises a module (23) for recovery of energy according to any one of the Claims 1 to 9.

13. Aircraft comprising at least one propulsion engine (3) and a cabin (5), **characterised in that** it comprises an environmental control system according to claim 12 for this cabin.
